# FASCICULE DE BREVET EUROPEEN

(11) **EP 3 671 454 B1**
(45) Date de publication et mention de la délivrance du brevet: **05.03.2025**
(21) Numéro de dépôt: 19219175.7
(22) Date de dépôt: 20.12.2019
(51) Int. Cl.: G06F 9/50, G06F 15/173, G06F 1/3234

(54) **PROCÉDÉ DE MISE EN OEUVRE D'UNE TÂCHE DANS UN SUPERCALCULATEUR, PROGRAMME D'ORDINATEUR CORRESPONDANT ET SUPERCALCULATEUR**
AUSFÜHRUNGSVERFAHREN EINER AUFGABE IN EINEM SUPERRECHNER, ENTSPRECHENDES COMPUTERPROGRAMM UND ENTSPRECHENDER SUPERRECHNER
METHOD FOR IMPLEMENTING A TASK IN A SUPERCOMPUTER, CORRESPONDING COMPUTER PROGRAM AND SUPERCOMPUTER

(30) Priorité: 21.12.2018 FR 1873793; 03.05.2019 FR 1904669
(43) Date de publication de la demande: 24.06.2020
(73) Titulaire: Bull SAS, 78340 Les Clayes-sous-Bois (FR); Commissariat à l'Energie Atomique et aux Energies Alternatives, 75015 Paris (FR)
(72) Inventeur: QUINTIN, Jean-Noël, 92340 Bourg-la-Reine (FR)
(74) Mandataire: Camus, Olivier Jean-Claude

(56) Documents cités:
- EP-A1- 2 988 215
- WO-A1-2017/056238
- US-A1- 2014 254 388
- US-B1- 8 155 022
- JENS DOMKE ET AL: "Scheduling-aware routing for supercomputers", 20161113; 1077952576 - 1077952576, 13 November 2016 (2016-11-13), pages 1 - 12, XP058308655, ISBN: 978-1-4673-8815-3

## Description

La présente invention concerne un procédé de mise en œuvre d'une tâche dans un supercalculateur, un programme d'ordinateur correspondant et un supercalculateur.

L'invention s'applique plus particulièrement à un procédé de mise en œuvre d'une tâche dans une grappe d'ordinateurs formant un supercalculateur comportant :
- des ordinateurs présentant chacun au moins une interface réseau formant un nœud ; et
- un réseau d'interconnexion des nœuds, comportant :
   -- des commutateurs présentant chacun des interfaces réseaux, et
   -- des liens connectant chacun soit un nœud et une interface réseau d'un commutateur, soit deux interfaces réseaux de deux commutateurs respectifs ;
le procédé comportant :
- le déploiement de la tâche dans le supercalculateur, ce déploiement comportant :
   -- l'allocation de nœuds à la tâche,
   -- la détermination, dans le réseau, d'un sous-réseau, d'interconnexion des nœuds alloués, satisfaisant un ou plusieurs critères de détermination prédéfinis,
   -- l'allocation du sous-réseau, et en particulier des liens appartenant à ce sous-réseau, à la tâche, et
   -- l'implémentation de routes de communication inter-nœuds dans le sous-réseau alloué ; et
- l'exécution de la tâche.

L'article de J. Domke et T. Hoefler intitué intitulé « Scheduling-Aware Routing for Supercomputers » et publié dans SC '16: Proceedings of the International Conference for High Performance Computing, Networking, Storage and Analysis, Salt Lake City, UT, 2016, pp. 142-153, doi: 10.1109/SC.2016.12 décrit un procédé utilisant une base de données avec la liste des tâches en cours d'exécution sur le supercalculateur, le routage recalculant les routes en fonction de leur utilisation afin de réduire la congestion sur le réseau.

L'article de Matthieu Perotin et Tom Cornebize intitulé « Isolating Jobs for Security on High-Performance Fabrics » publié dans High-Performance Interconnection Networks in the Exascale and Big-Data Era (HiPINEB) 2017, IEEE 3rd International Workshop on, pp. 49-56, 2017, décrit un procédé dans lequel les tâches sont isolées les unes des autres (dans le sens où elles ne peuvent pas communiquer entre elles) en supprimant des lignes dans les tables de routage, de manière à ce qu'il n'existe pas de route entre deux nœuds alloués respectivement à deux tâches différentes.

Le document EP 2 988 215 décrit un procédé/système de déploiement d'une tâche dans un dispositif informatique à processeurs multiples de type réseau sur puce. Il décrit entre autres la détermination, dans le réseau, d'un sous-réseau, d'interconnexion des nœuds alloués, satisfaisant un ou plusieurs critères de détermination prédéfinis.

II est en outre connu de mesurer le débit dans chaque lien d'un supercalculateur et, lorsque le débit mesuré est nul, de placer ce lien dans un état inactif.

Il peut ainsi être souhaité de prévoir un procédé de mise en œuvre d'une tâche dans une grappe d'ordinateurs formant un supercalculateur, qui permette de diminuer facilement la consommation énergétique du supercalculateur.

L'invention a donc pour objet un procédé de mise en œuvre d'une tâche dans une grappe d'ordinateurs formant un supercalculateur comportant :
- des ordinateurs présentant chacun au moins une interface réseau formant un nœud ; et
- un réseau d'interconnexion des nœuds, comportant :
   -- des commutateurs présentant chacun des interfaces réseaux, et
   -- des liens connectant chacun soit un nœud et une interface réseau d'un commutateur, soit deux interfaces réseaux de deux commutateurs respectifs ;

le procédé comportant :
   - le déploiement de la tâche dans le supercalculateur, ce déploiement comportant :
      -- l'allocation de nœuds à la tâche,
      -- la détermination, dans le réseau, d'un sous-réseau, d'interconnexion des nœuds alloués, satisfaisant un ou plusieurs critères de détermination prédéfinis,
      -- l'allocation du sous-réseau, et en particulier des liens appartenant à ce sous-réseau, à la tâche, et
      -- l'implémentation de routes de communication inter-nœuds dans le sous-réseau alloué ; et
   - l'exécution de la tâche.
le procédé étant caractérisé en ce qu'il comporte en outre :
   - à la fin de l'exécution de la tâche , la désallocation des liens alloués à la tâche, puis:
      -- la détection d'au moins un lien qui n'est alloué à aucune tâche, et
      -- le placement de chaque lien détecté dans un état inactif, dans lequel le lien requiert une consommation énergétique inférieure à une consommation énergétique requise par un lien associé à au moins une tâche.

Ainsi, il est possible de diminuer la consommation d'énergie du supercalculateur, sans avoir besoin de réaliser des mesures de débit dans les liens pour désactiver ceux dont le débit est nul.

De façon optionnelle, le procédé comporte, pour placer un lien dans l'état inactif, l'extinction des deux interfaces réseau que ce lien connecte de sorte qu'aucun courant ou lumière ne parcourt ce lien.

De façon optionnelle également, le procédé comporte, pour placer un lien dans l'état inactif, la diminution d'une fréquence de fonctionnement d'au moins une des deux interfaces réseau que ce lien connecte.

De façon optionnelle également, le ou les critères de détermination du sous-réseau comportent un critère selon lequel le sous-réseau utilise uniquement des liens qui ne sont alloués à aucune autre tâche déjà déployée ou bien qui sont alloués à moins de N autres tâches déjà déployées, N étant un nombre prédéfini valant un ou plus.

Ainsi, le nombre de tâches partageant chaque lien est limité, de sorte que chaque lien a peu de chance d'être congestionné. Ainsi, chaque tâche a l'impression d'être seule (ou presque) à utiliser le réseau d'interconnexion. Ainsi, en particulier, lorsqu'une tâche est exécutée plusieurs fois, l'environnement d'exécution varie peu, puisqu'il est peu affecté par les autres tâches en cours d'exécution.

De façon optionnelle également, le nombre prédéfini N vaut un.

De façon optionnelle également, le ou les critères de détermination du sous-réseau comportent un critère de minimisation de commutateurs utilisés, selon lequel le sous-réseau déterminé est celui, parmi au moins deux sous-réseaux satisfaisant le ou les critères autres que ce critère de minimisation de commutateurs utilisés, utilisant le plus de commutateurs déjà alloués chacun à au moins une tâche déjà déployée.

Ainsi, moins de commutateurs sont utilisés, ce qui permet d'éteindre, ou bien de placer dans un état de veille, un grand nombre de commutateurs inutilisés. Malgré la surconsommation et le léger temps de latence dus à l'allumage ou bien au réveil d'un commutateur, il a été trouvé, qu'en moyenne, le procédé de l'invention pouvait permettre une économie d'énergie sans retarder sensiblement le déploiement des tâches.

De façon optionnelle également, la détermination du sous-réseau comporte la détermination des au moins deux sous-réseaux satisfaisant le ou les critères autres que ce critère de minimisation de commutateurs utilisés, puis la sélection parmi ces au moins deux sous-réseaux de celui utilisant le plus de commutateurs déjà alloués chacun à au moins une tâche déjà déployée.

Il est également proposé un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé selon l'invention, lorsque ledit programme est exécuté sur un ou plusieurs ordinateurs.

Il est également proposé une grappe d'ordinateurs formant un supercalculateur comportant :
- des ordinateurs présentant chacun au moins une interface réseau formant un nœud ;
- un réseau d'interconnexion des noeuds, comportant :
   -- des commutateurs présentant chacun des interfaces réseaux, et
   -- des liens connectant chacun soit un nœud et une interface réseau d'un commutateur, soit deux interfaces réseaux de deux commutateurs respectifs ;
le supercalculateur comportant en outre des moyens logiciels et/ou matériels de déploiement d'une tâche, conçus pour mettre en œuvre les étapes suivantes :
- le déploiement de la tâche dans le supercalculateur, ce déploiement comportant :
   -- l'allocation de nœuds à la tâche,
   -- la détermination, dans le réseau, d'un sous-réseau, d'interconnexion des nœuds alloués, satisfaisant un ou plusieurs critères de détermination prédéfinis,
   -- l'allocation du sous-réseau, et en particulier des liens appartenant à ce sous-réseau, à la tâche, et
   -- l'implémentation de routes de communication inter-nœuds dans le sous-réseau alloué ; et
- l'exécution de la tâche ;
- à la fin de l'exécution de la tâche, la désallocation des liens alloués à la tâche, puis:
   -- la détection d'au moins un lien qui n'est alloué à aucune tâche, et
   -- le placement de chaque lien détecté dans un état inactif, dans lequel le lien requiert une consommation énergétique inférieure à une consommation énergétique requise par un lien associé à au moins une tâche.

L'invention sera mieux comprise à l'aide de la description qui va suivre, donnée uniquement à titre d'exemple et faite en se référant aux dessins annexés dans lesquels :
[Fig.1] la figure 1 représente schématiquement la structure générale d'une grappe d'ordinateurs formant un supercalculateur, selon un mode de réalisation de l'invention,
[Fig.2] la figure 2 représente schématiquement un commutateur du supercalculateur de la figure 1, ainsi que l'environnement de ce commutateur,
[Fig.3] la figure 3 illustre les étapes successives d'un procédé de mise en œuvre d'une tâche dans le supercalculateur de la figure 1, selon un mode de réalisation de l'invention,
[Fig.4] la figure 4 illustre un sous-réseau d'interconnexion de nœuds du supercalculateur de la figure 1 alloués à une première tâche,
[Fig.5] la figure 5 illustre un sous-réseau potentiel d'interconnexion de nœuds du supercalculateur de la figure 1 alloués à une deuxième tâche,
[Fig.6] la figure 6 illustre un sous-réseau potentiel d'interconnexion de nœuds du supercalculateur de la figure 1 alloués à une deuxième tâche,
[Fig.7] la figure 7 illustre un sous-réseau potentiel d'interconnexion de nœuds du supercalculateur de la figure 1 alloués à une deuxième tâche,
[Fig.8] la figure 8 illustre un sous-réseau potentiel d'interconnexion de nœuds du supercalculateur de la figure 1 alloués à une deuxième tâche,
[Fig.9] la figure 9 illustre les deux sous-réseaux d'interconnexion de nœuds du supercalculateur de la figure 1 alloués respectivement aux première et deuxième tâches,
[Fig.10] la figure 10 illustre un sous-réseau potentiel d'interconnexion de nœuds du supercalculateur de la figure 1 alloués à une troisième tâche,
[Fig.11] la figure 12 illustre un sous-réseau potentiel d'interconnexion de nœuds du supercalculateur de la figure 1 alloués à une troisième tâche,
[Fig.12] la figure 12 illustre un sous-réseau potentiel d'interconnexion de nœuds du supercalculateur de la figure 1 alloués à une troisième tâche,
[Fig.13] la figure 13 illustre les trois sous-réseaux d'interconnexion de nœuds du supercalculateur de la figure 1 alloués respectivement aux première, deuxième et troisième tâches, et
[Fig.14] la figure 14 illustre des liens libérés suite à l'arrêt de l'exécution de la deuxième tâche, dans le supercalculateur de la figure 1.

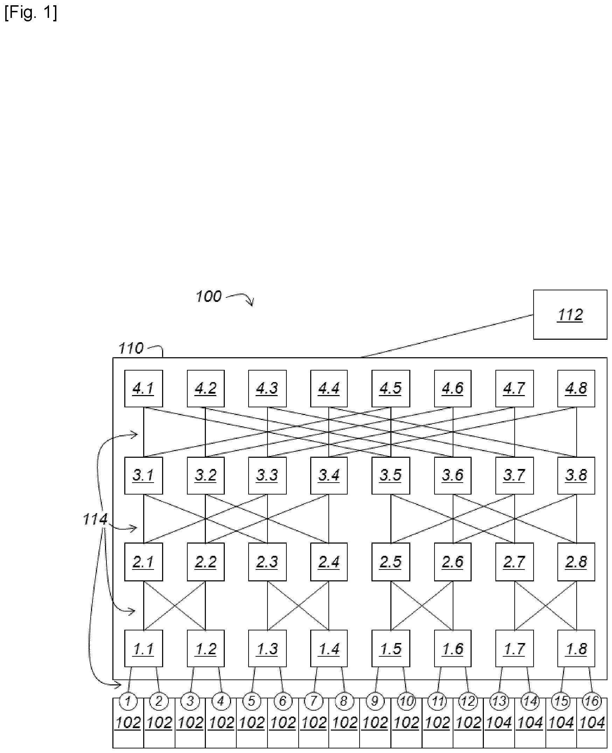

En référence à la figure 1, une grappe d'ordinateurs 100 (« computer cluster » en anglais) formant un supercalculateur, mettant en œuvre l'invention va à présent être décrite.

**La** grappe d'ordinateurs 100 regroupe des ordinateurs 102, 104 indépendants apparaissant de l'extérieur comme un calculateur unique à très forte puissance de calcul, dit calculateur à haute performance de traitement ou bien calculateur HPC (de l'anglais « High Performance Computing ») ou bien supercalculateur. Chaque ordinateur 102, 104 comporte, comme cela est connu en soi, une unité de traitement centrale (« central processing unit » en anglais), une mémoire principale (« main memory » en anglais) dans laquelle des instructions pour l'unité de traitement centrale sont destinées à être enregistrées et au moins une interface réseau.

Les interfaces réseau forment respectivement des nœuds 1...16 de la grappe d'ordinateurs 100. Plusieurs interfaces réseau (et donc plusieurs nœuds 1...16) peuvent appartenir à un même ordinateur 102, 104, ou bien, comme dans l'exemple décrit, chaque ordinateur 102, 104 peut ne comporter qu'une seule interface réseau formant un des nœuds 1...16.

Toujours dans l'exemple décrit, les ordinateurs 102, 104 de la grappe d'ordinateurs 100 comportent des ordinateurs de calcul 102 et des ordinateurs de stockage 104, ces derniers comportant des mémoires de masse telles que des disques durs pour l'enregistrement de données utilisées et/ou produites par les ordinateurs de calcul 102.

Toujours dans l'exemple décrit, les interfaces réseau des ordinateurs de stockage 104 sont des interfaces réseau optiques, tandis que les interfaces réseau des ordinateurs de calcul 102 sont des interfaces réseau électriques présentant un débit inférieur à celui des interfaces réseau optiques. En effet, les ordinateurs de stockage 104 échangent en général plus de données que les ordinateurs de calcul 102.

La grappe d'ordinateurs 100 comporte en outre un réseau 110 d'interconnexion des nœuds 1...16.

Le réseau 110 comporte, d'une part, des commutateurs 1.1...4.8 présentant chacun au moins une interface réseau et, d'autre part, des liens de communication 114 connectant chacun soit un nœud 1...16 et une interface réseau d'un commutateur 1.1...1.8, soit deux interfaces réseau de deux commutateurs 1.1...4.8 respectifs.

La grappe d'ordinateurs 100 présente une certaine topologie définissant l'agencement relatif des nœuds 1...16, des commutateurs 1.1...4.8 et des liens de communication 114. Dans l'exemple décrit, la topologie est celle d'un arbre imposant parallèle généralisé (« Parallel Generalized Fat Tree » ou PGFT en anglais). La topologie d'un PGFT est définie de manière générale par la nomenclature suivante : PGFT(h ; m_1... m_h ; w 1...w h ; p_1... p_h), où h est le nombre de niveaux entre lesquels les commutateurs sont répartis, m_n est le nombre de commutateurs de niveau n-1 (ou bien de nœuds pour le premier niveau) connectés à chaque commutateur de niveau n, w_n est le nombre de commutateurs de niveau n connectés à chaque commutateur de niveau n-1 (ou bien à chaque nœud pour le premier niveau) et p_n est le nombre de liens de communication parallèles utilisés entre les niveaux n et n-1 (ou bien entre le niveau n et les nœuds pour le premier niveau). Dans l'exemple décrit, la topologie de la grappe d'ordinateurs 100 est PGFT(4 ; 2, 2, 2, 2 ; 1, 2, 2, 2 ; 1, 1, 1, 1). Ainsi, dans l'exemple décrit les commutateurs de premier niveau sont les commutateurs 1.1 ... 1.8, les commutateurs de deuxième niveau sont les commutateurs 2.1 ... 2.8, etc.

Chaque commutateur 1.1...4.8 comporte des ports de connexion présents dans la ou les interfaces réseau de ce commutateur 1.1...4.8, auxquels les liens de communication 114 sont respectivement connectés. Dans l'exemple décrit, les liens de communication 114 sont tous bidirectionnels, de sorte que tous les ports sont à la fois des ports entrant et sortant.

Par ailleurs, dans l'exemple décrit, chaque commutateur 1.1...4.8 comporte des tables de routage locales respectivement associées à ses ports entrant. Chaque table de routage locale associe un port sortant du commutateur à chaque destination d'un message arrivant par le port entrant considéré.

En outre, chaque commutateur 1.1...4.8 comporte des tables de routages locales par défaut. Dans l'exemple décrit, les tables de routage par défaut sont par exemple préalablement déterminées par l'algorithme d-mod-k ou bien par l'algorithme s-mod-k.

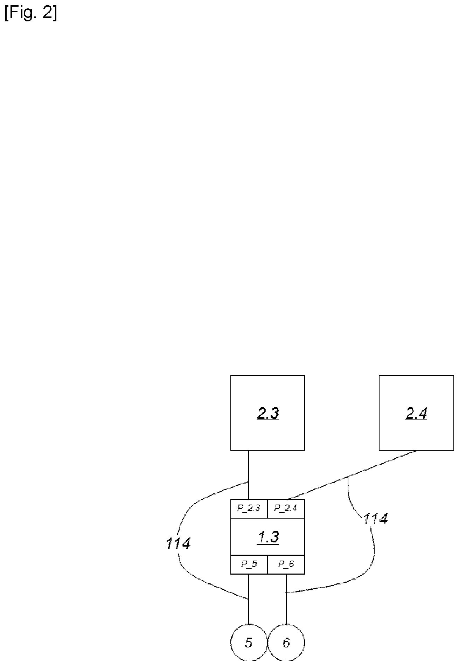

Par exemple, le commutateur 1.3 est illustré sur la figure 2 avec les quatre liens de communication 114 le connectant à ses nœuds 5 et 6 voisins et à ses commutateurs 2.3 et 2.4 voisins. Le commutateur 1.3 comporte ainsi les quatre ports : P_5, P_6, P_2.3 et P_2.4, qui sont à la fois des ports entrant et sortant. Un exemple de table de routage locale par défaut du port P_6 du commutateur 1.3, obtenue par l'algorithme d-mod-k, est illustré dans le tableau 1 ci-dessous.

**[Tableau 1]**

| Table de routage locale par défaut du port P_6 du commutateur 1.3 | |
|---|---|
| Nœuds de destination | Port de sortie |
| 1 | P 2.3 |
| 2 | P 2.4 |
| 3 | P 2.3 |
| 4 | P_2.4 |
| 5 | P 5 |
| 6 | P 6 |
| 7 | P 2.3 |
| 8 | P 2.4 |
| 9 | P 2.3 |
| 10 | P 2.4 |
| 11 | P 2.3 |
| 12 | P 2.4 |
| 13 | P 2.3 |
| 14 | P 2.4 |
| 15 | P 2.3 |
| 16 | P 2.4 |

De retour à la figure 1, la grappe d'ordinateurs 100 comporte en outre un serveur d'administration 112. Le serveur d'administration 112 est en particulier conçu pour dialoguer avec des clients souhaitant utiliser la grappe d'ordinateurs 100, cette dernière étant alors vue par les clients comme une machine unique.

Le serveur d'administration 112 est conçu pour mettre en œuvre un procédé de mise en œuvre de tâches, comme cela sera décrit par la suite. Pour cela, le serveur d'administration 112 comporte des moyens logiciels et/ou matériels, comme par exemple un gestionnaire de ressources (comme le logiciel « slurm ») et un module d'établissement de routage, pour réaliser les étapes qui seront décrites par la suite. Dans l'exemple décrit, le serveur d'administration 112 comporte, comme cela est connu en soi, une unité de traitement centrale et une mémoire principale dans laquelle des instructions pour l'unité de traitement centrale sont destinées à être enregistrées. Ainsi, dans l'exemple décrit, les moyens sont des moyens logiciels, sous la forme de programme d'ordinateur téléchargeable depuis un réseau de communication et/ou enregistré sur un support lisible par ordinateur et/ou exécutable par un processeur, comprenant des instructions pour l'exécution des étapes du procédé lorsque ledit programme d'ordinateur est exécuté sur le serveur d'administration. Alternativement, tout ou partie de ces moyens pourraient être des moyens matériels micro programmés ou micro câblés dans des circuits intégrés dédiés. Ainsi, en variante, le serveur d'administration 112 pourrait être un dispositif électronique composé uniquement de circuits numériques (sans programme d'ordinateur) pour la réalisation des mêmes actions.

Dans d'autres modes de réalisation de l'invention, les différentes fonctions du serveur d'administration 112 pourraient être réparties entre plusieurs dispositifs, par exemple entre plusieurs ordinateurs. Par exemple, le gestionnaire de ressources pourrait être implémenté sur un ordinateur et le module d'établissement de routage sur un autre ordinateur.

La grappe d'ordinateurs 100 permet la répartition de traitements complexes et/ou de calculs parallèles sur au moins une partie des ordinateurs de calcul 102.

Comme cela sera expliqué plus en détail par la suite, à chaque tâche déployée sont alloués, d'une part, des noeuds et, d'autre part, des commutateurs et des liens entre ces commutateurs, formant un sous-réseau d'interconnexion des noeuds alloués.

Dans la description qui va suivre la terminologie suivante sera utilisée.

Un lien est dit inutilisé lorsqu'il n'est alloué à aucune tâche. Ainsi, aucune tâche n'utilise ce lien, de sorte qu'aucune donnée liée à l'exécution d'une tâche ne passe par ce lien. Le lien est dit utilisé dans le cas contraire, c'est-à-dire lorsqu'il est alloué à au moins une tâche, de sorte que des données liées à l'exécution de cette ou ces tâches passent par ce lien.

Un lien est dit disponible lorsqu'il est inutilisé (c'est-à-dire, comme expliqué précédemment, alloué à aucune tâche) ou bien lorsqu'il est alloué à moins de N autres tâches, N étant un nombre prédéfini valant au moins un. Le nombre prédéfini N représente donc le nombre maximal de tâche(s) pouvant utiliser un même lien. Le nombre N peut être égal à un, auquel cas les deux branches de l'alternative précédentes sont équivalentes. Alternativement, le nombre N peut valoir deux ou plus. Le nombre N est par exemple défini avant que des tâches ne soient déployées dans la grappe d'ordinateurs 100, et s'applique pour toutes les tâches déployées ultérieurement, jusqu'à une redéfinition de ce nombre N. Cette redéfinition a par exemple lieu lorsque aucune tâche n'est déployée dans la grappe d'ordinateurs 100.

Un commutateur est dit inutilisé lorsqu'il n'est alloué à aucune tâche. Il est dit utilisé lorsqu'il est alloué à au moins une tâche.

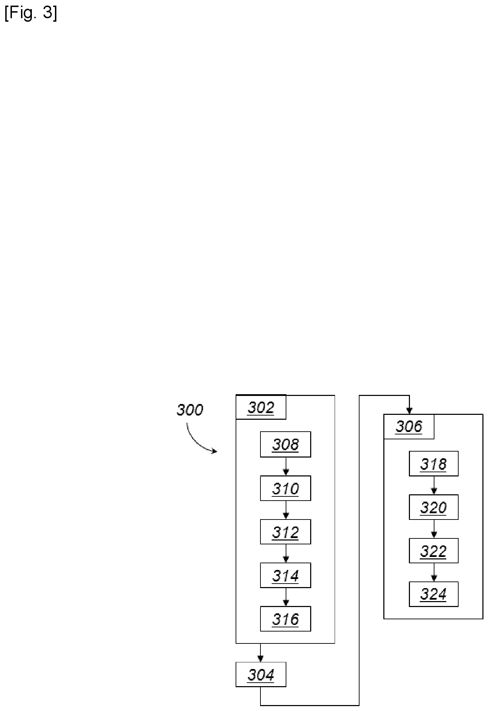

En référence à la figure 3, un procédé 300 de mise en œuvre d'une tâche, appelée par la suite tâche en cours, dans la grappe d'ordinateurs 100 va à présent être décrit.

Le procédé 300 comporte une étape 302 de déploiement de la tâche en cours dans la grappe d'ordinateurs 100, une étape 304 d'exécution de la tâche en cours et une étape 306 de nettoyage après exécution.

L'étape 302 de déploiement de la tâche en cours comporte les étapes 308 à 316 suivantes. L'étape 308 est par exemple réalisée par le gestionnaire de ressources, tandis que les étapes 310 à 316 sont réalisées par le module d'établissement de routage.

Au cours d'une étape 308, le serveur d'administration 112 reçoit la tâche en cours, ainsi qu'un nombre représentant le nombre de nœuds dont a besoin la tâche en cours pour son exécution.

Au cours d'une étape 310, le serveur d'administration 112 alloue des nœuds à la tâche en cours, connectés au minimum possible de commutateurs inutilisés. Par exemple, le serveur d'administration 112 alloue en priorité les nœuds connectés aux commutateurs déjà utilisés, puis des nœuds consécutifs.

Au cours d'une étape 312, le serveur d'administration 112 détermine un sous-réseau du réseau 110, satisfaisant des critères de détermination prédéfinis.

Les critères de détermination comportent en particulier un premier critère selon lequel le sous-réseau interconnecte les nœuds alloués.

Dans l'exemple décrit, les critères de détermination comporte en outre un deuxième critère selon lequel le sous-réseau utilise uniquement des liens disponibles (c'est-à-dire alloué à aucune autre tâche ou bien alloué à moins de N autres tâches déjà déployées) et un troisième critère selon lequel le sous-réseau déterminé est celui, parmi au moins deux sous-réseaux satisfaisant les autres critères, utilisant le plus de commutateurs déjà utilisés (c'est-à-dire alloués à au moins une tâche déjà déployée).

Dans l'exemple décrit, les au moins deux sous-réseau comportent tous les sous-réseaux satisfaisant les autres critères.

Dans un mode de réalisation, les sous-réseaux recherchés sont des arbres. Ainsi, le serveur d'administration 112 parcourt les commutateurs, par exemple par ordre croissant de niveau, pour trouver chaque arbre (i) ayant ce commutateur pour origine, (ii) n'utilisant que des liens disponibles et (iii) desservant tous les nœuds alloués à la tâche en cours. Ainsi, dans l'exemple décrit, le serveur d'administration 112 détermine tous les arbres possibles ayant le même niveau minimal pour desservir tous les nœuds alloués (en effet, les arbres dont le sommet est de niveau supérieur nécessiteront obligatoirement plus de commutateurs inutilisés) et sélectionne, parmi ces arbres possibles, celui utilisant le plus de commutateurs déjà utilisés.

Alternativement, on pourrait utiliser un algorithme construisant le sous-réseau satisfaisant les trois critères de détermination. Ainsi, il n'y aurait pas besoin de déterminer explicitement tous les sous-réseaux satisfaisant les critères autres que le troisième, pour en sélectionner un. La construction en elle-même s'assurerait que le sous-réseau construit serait celui utilisant le plus de commutateurs déjà utilisés.

Par exemple, un algorithme de construction du sous-réseau est présenté en annexe.

Cet algorithme utilise la notion de sous-topologie.

Une sous-topologie est par exemple un ensemble de un ou plusieurs commutateurs parmi lesquels aucun n'est connecté à un commutateur de niveau inférieur. Ainsi, la topologie complète est un exemple de sous-topologie. Chaque commutateur de premier niveau est également un exemple de sous-topologie.

Une autre définition de sous-topologie est donnée dans l'article de Jean-Noël QUINTIN et Pierre VIGNERAS intitulé « Transitively Deadlock-Free Routing Algorithms » publié en 2016 dans la conférence Conference: HiPINEB, HPCA et accessible à l'adresse suivante : https://www.researchgate.net/publication/301345528_Transitively_Deadlock-Free_Routing_Algorithms

Cet article définit le concept de sous-topology (« enclosing sub-topology »), représentée par un tuple (d₁,...d₁), l < lₘₐₓ-1 : l'ensemble des commutateurs de niveau k, k < lₘₐₓ-l avec des adresse topologique sous la forme de (k, d₁, ..., dₗ, eᵢ..., eₗₘₐₓ₋₁) : ils partagent tous le même infix donné par la notation de la sous-topologie.

Au cours d'une étape 314, le serveur d'administration 112 alloue le sous-réseau déterminé à l'étape 312 à la tâche en cours. Les liens et les commutateurs de ce sous-réseau sont ainsi alloués à la tâche en cours. Ainsi, chaque lien est dédié à au maximum N tâches, ce qui permet de réduire l'impact des tâches entre elles. Ainsi, il est possible de réduire la variance des temps d'exécution successifs d'une même tâche. En effet, à chaque exécution de cette tâche, les liens qu'elle utilisera seront partagés avec un nombre limité d'autres tâches. Au mieux, lorsque le nombre N vaut un, les liens utilisés par cette tâche lui seront complètement dédiés. Ainsi, l'environnement d'exécution de cette tâche varie peu à chaque nouvelle exécution, ce qui entraîne la réduction de la variance des temps d'exécution.

Au cours d'une étape 316, le serveur d'administration 112 implémente, dans le réseau d'interconnexion 110, des routes de communication inter-noeuds dans le sous-réseau alloué. Dans l'exemple décrit, cette implémentation est réalisée en modifiant, si besoin, les tables de routage locales. Plus précisément, dans l'exemple décrit où un réseau PGFT est utilisé, il n'est nécessaire de modifier que les tables de routage montantes, c'est-à-dire pour passer à un niveau supérieur. En outre, les tables de routages montantes ne doivent être modifiées que dans le cas où des noeuds alloués à la tâche ne forment pas une sous-topologie complète. Ainsi, les modifications éventuelles à apporter sont en nombre très restreint, ce qui ne ralentit pas sensiblement le déploiement de la tâche.

Après l'étape 302 de déploiement, la tâche en cours s'exécute au cours de l'étape 304.

L'étape 306 de nettoyage après exécution comporte les étapes 318 à 324 suivantes.

Au cours d'une étape 318, le serveur d'administration 112 annule les modifications réalisées à l'étape 316 dans les tables de routage locales. Ce retour aux tables de routage par défaut permet que le déploiement d'une nouvelle tâche ne nécessitera que peu de modifications des tables de routage par défaut, comme expliqué ci-dessus à propos de l'étape 316.

Au cours d'une étape 320, le serveur d'administration 112 libère (c'est-à-dire, désalloue) les noeuds et le sous réseau alloués à la tâche en cours.

Au cours d'une étape 322, le serveur d'administration 112 recherche les liens inutilisés de la grappe d'ordinateurs 100 (c'est-à-dire qui ne sont alloués à aucune tâche). De préférence, la recherche est réalisée uniquement parmi les liens libérés à l'étape 320.

Au cours d'une étape 324, le serveur d'administration place chaque lien trouvé dans un état inactif dans lequel le lien requiert une consommation énergétique inférieure à une consommation énergétique requise par un lien actif associé à au moins une tâche (et donc utilisée par cette ou ces tâches).

Par exemple, dans un mode de réalisation, le serveur d'administration 112 éteint des deux interfaces réseau que ce lien connecte de sorte qu'aucun courant ou lumière ne parcourt ce lien. Dans un autre mode de réalisation, le serveur d'administration 112 diminue une fréquence de fonctionnement des deux interfaces réseau que ce lien connecte.

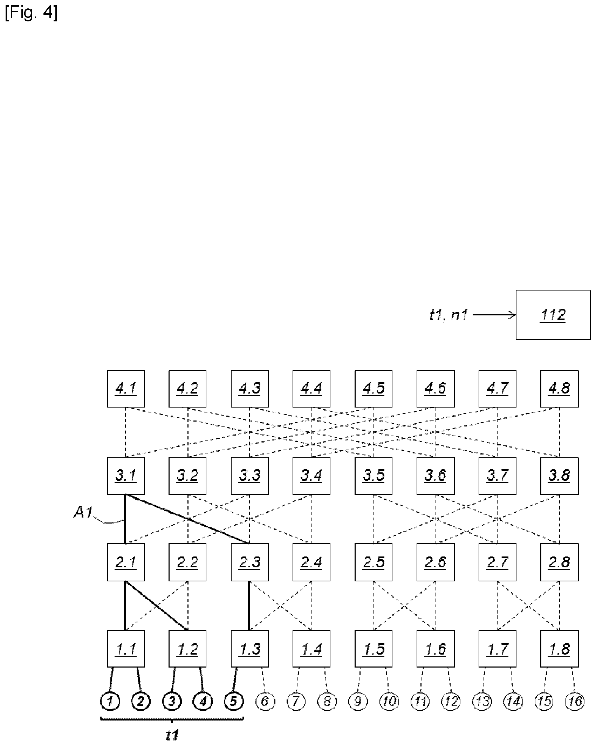

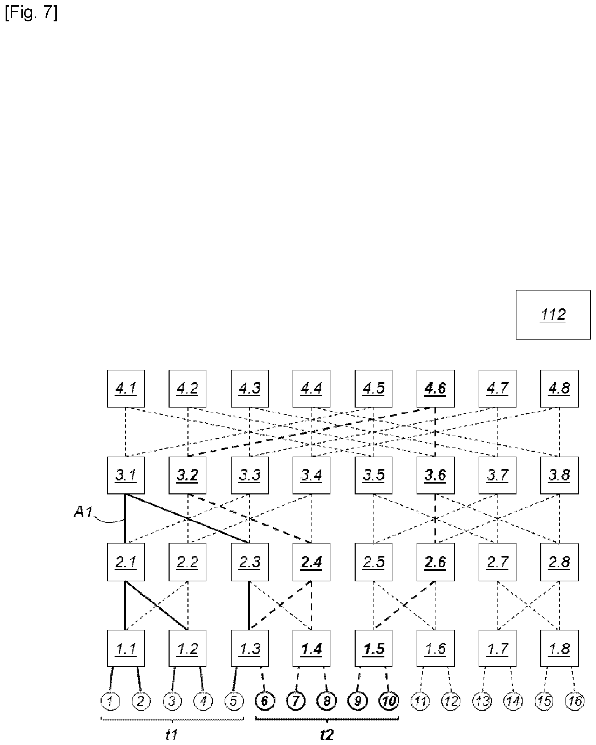

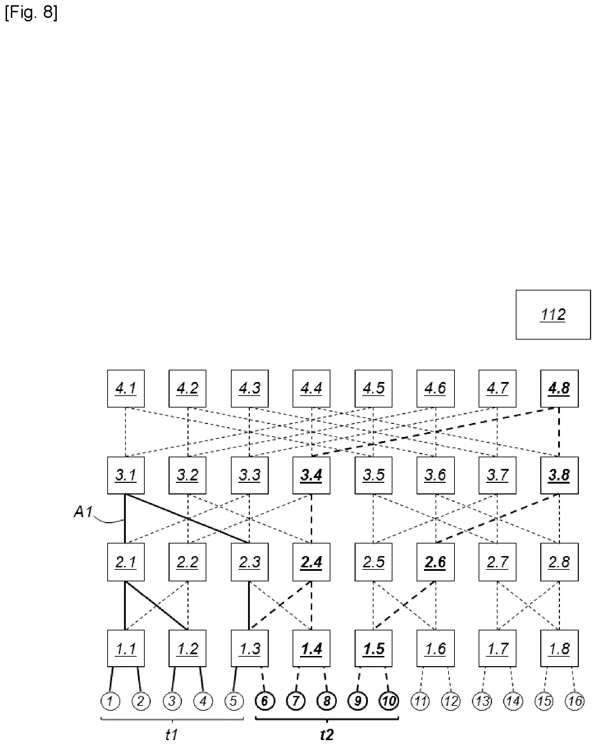

En référence aux figures 4 à 12, un exemple non limitatif de mise en œuvre du procédé 300 va à présent être décrit.

II est supposé que la grappe d'ordinateurs 100 est configurée de sorte que le nombre prédéfini N vaut un. Ainsi, chaque lien de la grappe d'ordinateurs 100 ne peut être alloué qu'à au plus une tâche. En outre, il est supposé qu'initialement aucune tâche n'est déployée dans la grappe d'ordinateurs 100. Ainsi, tous les liens sont disponibles. De ce fait, les tables de routage locales par défaut sont utilisées et les liens sont placés dans l'état inactif afin de diminuer la consommation électrique de la grappe d'ordinateurs 100.

En référence à la figure 4, le serveur d'administration 112 met en œuvre l'étape 308 et reçoit une tâche t1 nécessitant n1 nœuds de la grappe d'ordinateurs 100. Dans l'exemple décrit, n1 vaut cinq.

Le serveur d'administration 112 met en œuvre l'étape 310 et alloue à la tâche t1 les n1 nœuds suivants : 1, 2, 3, 4, 5.

Le serveur d'administration 112 met en œuvre l'étape 312 et détermine un sous-réseau d'interconnexion des nœuds alloués. Dans l'exemple décrit, le serveur d'administration 112 parcourt les commutateurs par ordre croissant de niveau et, dans l'exemple décrit, par numéro croissant sur un même niveau (de gauche à droite sur la figure 4). Ainsi, le serveur d'administration 112 parcourt les commutateurs de premier niveau, puis ceux de deuxième niveau. Or, pour les commutateurs 1.1 à 1.8 et 2.1 à 2.8, il n'existe pas d'arbre reliant tous les nœuds alloués 1, 2, 3, 4, 5. Ainsi, le serveur d'administration 112 arrive au commutateur 3.1, d'où part l'arbre A1 représenté en gras sur la figure 4. L'arbre A1 n'utilise que des liens disponibles et interconnecte tous les nœuds alloués 1, 2, 3, 4, 5.

Il existe également un autre arbre, issu du commutateur 3.3, qui interconnecte tous les nœuds alloués et n'utilise que des liens disponibles. Ces deux arbres comportent le même nombre de commutateurs inutilisés (six), de sorte que le serveur d'administration peut retenir n'importe lequel. Le serveur d'administration 112 retient par exemple l'arbre A1.

Le serveur d'administration 112 met en œuvre l'étape 314 et alloue alors l'arbre A1 à la tâche t1.

Le serveur d'administration 112 met en œuvre l'étape 316 et implémente, dans l'arbre A1, des routes de communication entre les nœuds alloués. Pour cela, dans l'exemple décrit, le serveur d'administration 112 modifie, si besoin, les tables de routage locales.

À ce stade, la tâche t1 est déployée et est exécutée (étape 304) par la grappe d'ordinateurs 100, sur les nœuds alloués qui communiquent entre eux en suivant les routes de l'arbre A1.

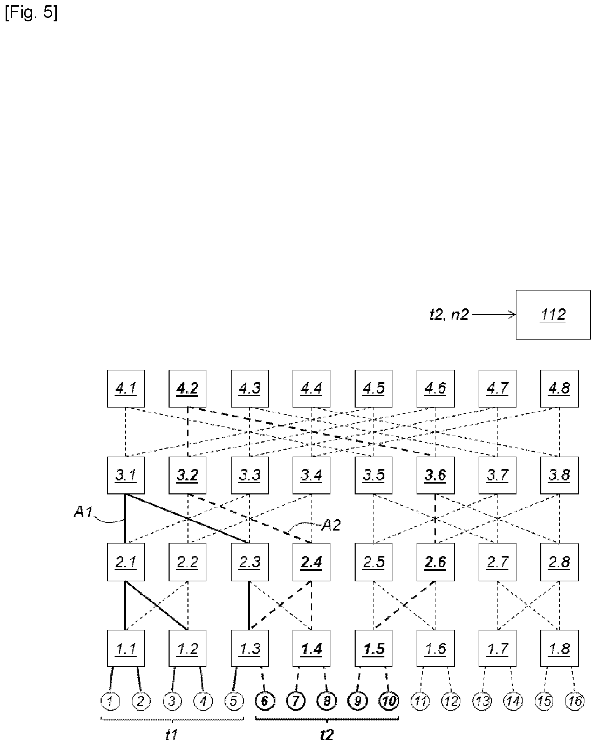

En référence à la figure 5, le serveur d'administration 112 met en œuvre l'étape 308 et reçoit alors une tâche t2 nécessitant n2 nœuds de la grappe d'ordinateurs 100. Dans l'exemple décrit, n2 vaut cinq.

Le serveur d'administration 112 met en œuvre l'étape 310 et alloue à la tâche t2 des nœuds en allouant en priorité les nœuds connectés aux commutateurs déjà utilisés, c'est-à-dire le nœud 6. Ainsi, dans l'exemple décrit, le serveur d'administration 112 alloue à la tâche t2 les n2 nœuds suivants : 6, 7, 8, 9, 10.

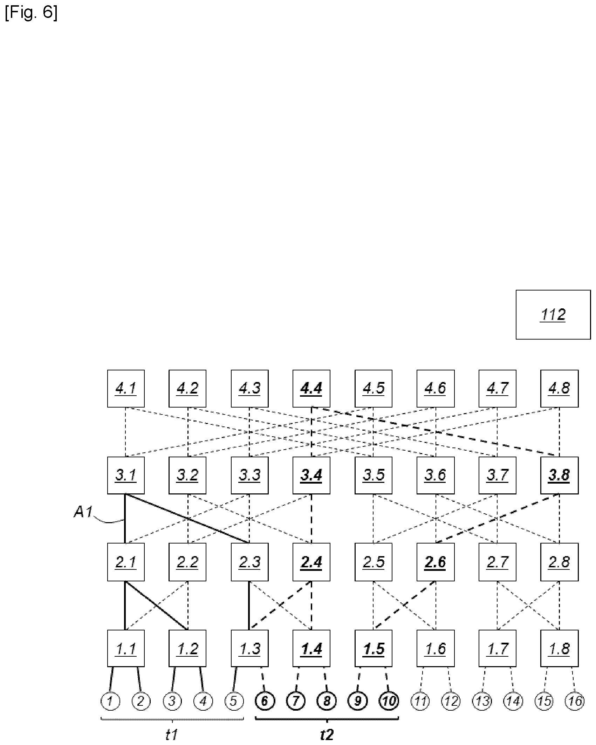

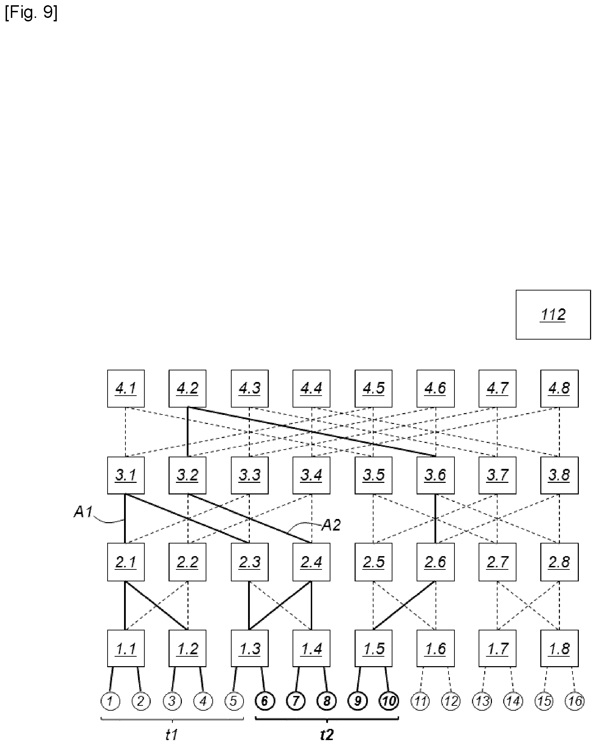

Le serveur d'administration 112 met en œuvre l'étape 312 et détermine un sous-réseau d'interconnexion des nœuds alloués. Comme précédemment, le serveur d'administration 112 parcourt les commutateurs par niveau croissant. Le premier commutateur duquel part un arbre desservant les nœuds alloués 6, 7, 8, 9, 10 est le commutateur 4.1. Cet arbre comporte néanmoins le lien entre les commutateurs 2.3 et 3.1, qui est déjà alloué à la tâche t1 et donc non disponible. Ainsi, le serveur d'administration 112 ne retient pas cet arbre et passe au commutateur 4.2, duquel part l'arbre A2. Cet arbre n'utilise que des liens disponibles et dessert tous les nœuds alloués 6, 7, 8. De la même manière, le serveur d'administration 112 détermine les arbres issus des commutateurs 4.4, 4.6, et 4.8 respectivement illustrés sur les figures 6, 7 et 8. Ces quatre arbres comportent le même nombre de commutateur inutilisés. Ainsi, le serveur d'administration 112 peut sélectionner n'importe lequel, par exemple l'arbre A2 issu du commutateur 4.2 (figure 9).

Le serveur d'administration 112 met en œuvre l'étape 314 et alloue l'arbre A2 à la tâche t2.

Le serveur d'administration 112 met en œuvre l'étape 316 et implémente, dans l'arbre A2, des routes de communication entre les nœuds alloués.

Pour cela, dans l'exemple décrit, le serveur d'administration 112 modifie, si besoin, les tables de routage locales. Par exemple, la table de routage locale du port P_6 du commutateur 1.3 est modifiée comme illustré dans le tableau 2 ci-dessous (modification indiquée en gras et en italique).

**[Tableau 2]**

| Table de routage locale modifiée du port P 6 du commutateur 1.3 | |
|---|---|
| Nœuds de destination | Port de sortie |
| 1 | P 2.3 |
| 2 | P 2.4 |
| 3 | P 2.3 |
| 4 | P 2.4 |
| 5 | P 5 |
| 6 | P 6 |
| 7 | *P* 2.4 |
| 8 | P 2.4 |
| 9 | P 2.3 |
| 10 | P 2.4 |
| 11 | P 2.3 |
| 12 | P 2.4 |
| 13 | P 2.3 |
| 14 | P 2.4 |
| 15 | P 2.3 |
| 16 | P 2.4 |

Ainsi, les messages en provenance du nœud 6 et à destinations des nœuds 7 à 10 passent tous par le lien reliant les commutateurs 1.3 et 2.4 et évitent donc le lien reliant les commutateurs 1.3 et 2.3 alloué à la tâche t1, ce qui n'aurait pas été le cas si la table de routage par défaut avait été gardée.

À ce stade, les tâches t1, t2 sont déployées et exécutées (étape 304) par la grappe d'ordinateurs 100, sur les nœuds respectivement alloués qui communiquent entre eux en suivant respectivement les routes des arbres A1 et A2.

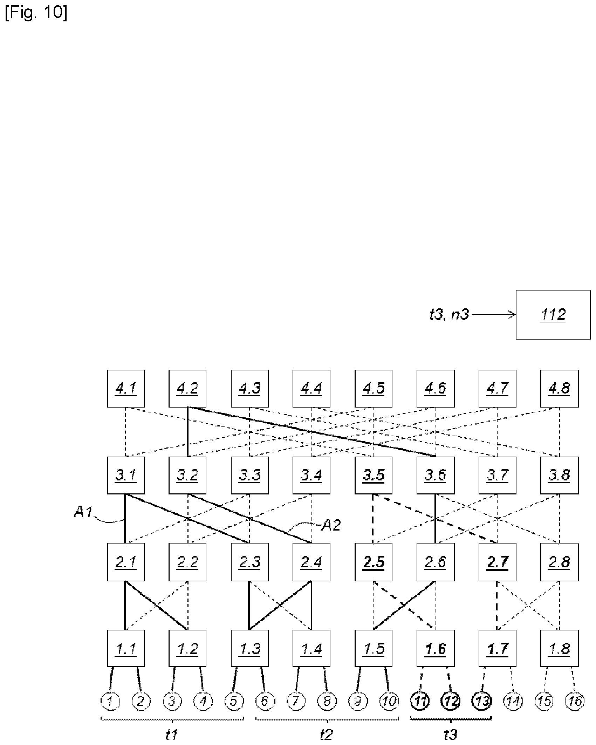

En référence à la figure 10, le serveur d'administration 112 met en œuvre l'étape 308 et reçoit alors une tâche t3 nécessitant n3 nœuds de la grappe d'ordinateurs 100. Dans l'exemple décrit, n3 vaut trois.

Le serveur d'administration 112 met en œuvre l'étape 310 et alloue à la tâche t3 des nœuds en allouant en priorité les nœuds connectés aux commutateurs déjà utilisés (aucun à ce stade), puis des nœuds consécutifs. Ainsi, dans l'exemple décrit, le serveur d'administration 112 alloue à la tâche t3 les n3 nœuds suivants : 11, 12, 13.

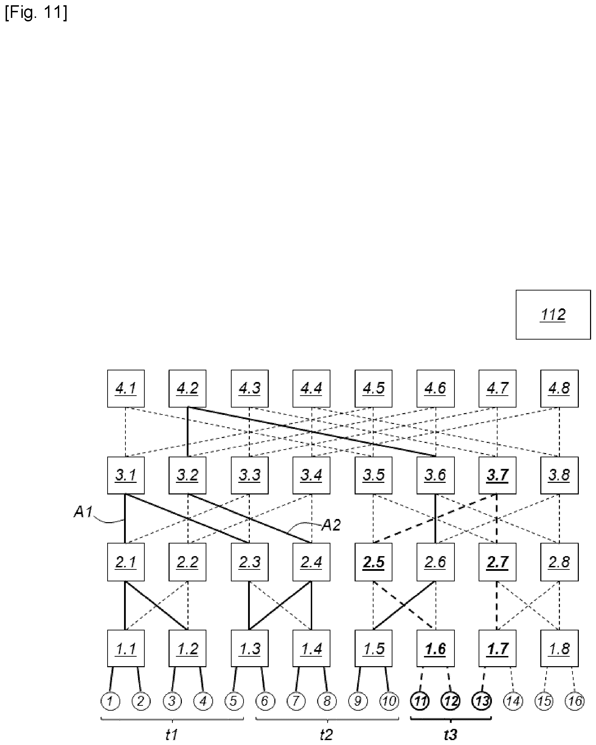

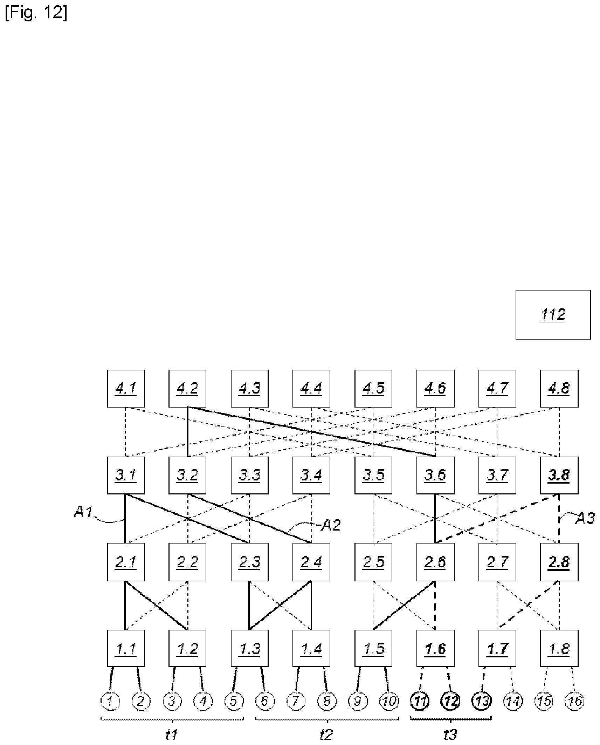

Le serveur d'administration 112 met en œuvre l'étape 312 et détermine un sous-réseau d'interconnexion des nœuds alloués. Le serveur d'administration 112 trouve donc les trois arbres issus respectivement des commutateurs 3.5, 3.7, 3.8, respectivement illustrés sur les figures 10, 11 et 12, satisfaisant les premier et deuxième critères de détermination. Parmi ces trois arbres, celui issu du commutateur 3.8 (appelé par la suite A3) comporte quatre commutateurs non utilisés (numérotés en gras sur la figure 12), tandis que les deux autres arbres nécessitent chacun cinq commutateurs non utilisés (numérotés en gras sur les figures 10 et 11). Ainsi, l'arbre issu du commutateur 3.8 (l'arbre A3) satisfait le troisième critère de détermination et est donc retenu par le serveur d'administration 112.

Le serveur d'administration 112 met en œuvre l'étape 314 et alloue l'arbre A3 à la tâche t3.

Le serveur d'administration 112 met en œuvre l'étape 316 et implémente, dans l'arbre A3, des routes de communication entre les nœuds alloués, en modifiant, si besoin, les tables de routage locales.

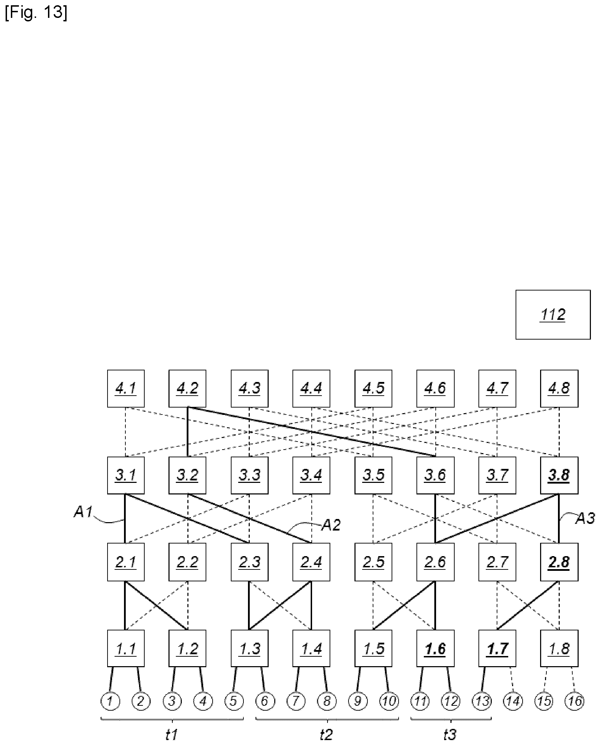

À ce stade, les tâches t1, t2 et t3 sont déployées et exécutées (étape 304) par la grappe d'ordinateurs 100, sur les nœuds respectivement alloués qui communiquent entre eux en suivant respectivement les routes des arbres A1, A2 et A3 (figure 13).

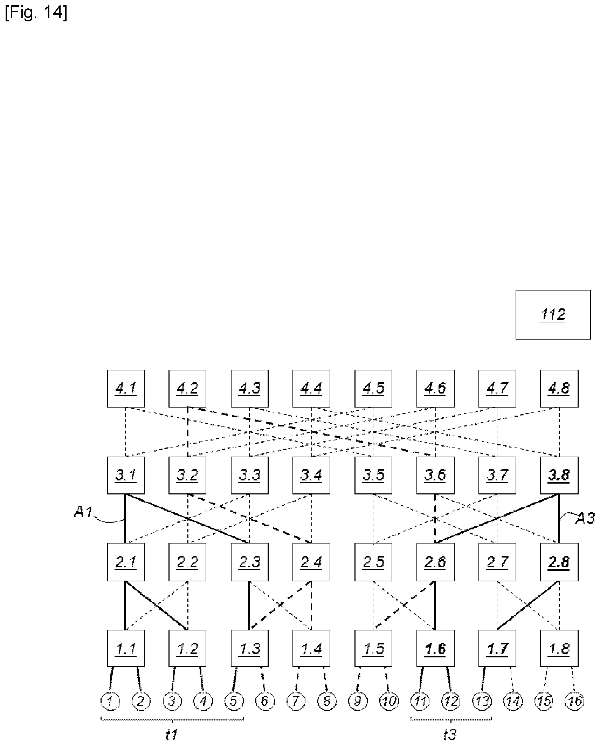

En référence à la figure 14, à un instant ultérieur, la tâche t2 termine son exécution.

Ainsi, le serveur d'administration 112 met en œuvre l'étape 318 et annule les modifications réalisées dans les tables de routages locales pour déployer la tâche t2.

Le serveur d'administration 112 met en œuvre l'étape 320 et libère (c'est-à-dire, désalloue) les nœuds et le sous-réseau A2 alloués à la tâche t2. Les liens libérés sont représentés en pointillés et en gras.

Le serveur d'administration 112 met en œuvre l'étape 322 et recherche les liens de la grappe d'ordinateurs 100 qui ne sont alloués à aucune tâche. De préférence, la recherche est réalisée uniquement parmi les liens de la tâche t2. Dans l'exemple décrit, comme un lien ne peut être alloué qu'à au plus une tâche (N est égal à un), tous les liens qui étaient alloués à la tâche t2 deviennent inutilisés.

Le serveur d'administration 112 met en œuvre l'étape 324 et place chaque lien trouvé (c'est-à-dire dans l'exemple décrit tous les liens qui étaient alloués à la tâche t2, représentés en pointillés et en gras) dans l'état inactif.

Ainsi, il est possible de réduire l'utilisation énergétique en désactivant les liens non utilisés, en particulier, ceux connectant des commutateurs aux nœuds de calcul. Généralement, sur un PGFT, la moitié des liens sont dédiés aux nœuds de calcul et l'autre moitié aux liens inter-commutateurs. Si par exemple dix nœuds connectés à un même commutateur sont utilisés pour une tâche en particulier, ces dix nœuds ne communiqueront à l'extérieur que vers les nœuds d'entrée/sortie (par exemple, les nœuds des ordinateurs de stockage 104). Ainsi il est possible d'éteindre jusqu'à dix liens durant l'exécution de cette tâche (en fonction du nombre de nœuds d'entrée/sortie dans le supercalculateur ainsi que les besoins en nœuds d'entrée/sortie demandés par l'utilisateur, il est possible de conserver ces liens actifs).

II apparaît clairement qu'un procédé tel que celui décrit précédemment permet de diminuer la consommation énergétique du supercalculateur.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

### ANNEXE

- Compter le nombre de nœuds alloués par sous-topologie.
- Pour chaque sous-topologie avec un nombre non nul de nœud alloués :
   -- (les commutateurs portant respectivement des numéros s croissants partant de 0) pour s = 0 ; s < S_n ; s++ :
      --- vérifier s'il existe un arbre de liens permettant d'accéder à l'ensemble des nœuds alloués dans la sous-topologie,
      --- si oui, incrémenter le nombre de top commutateurs accessibles de ces commutateurs,
      --- si non, passer au suivant.
- Prendre une des sous-topologies la plus importante (appellé T_n_c de niveau n : les commutateurs de plus haut niveau sont de niveau n).
- Considérons qu'il y a S_n commutateurs de niveau n.
- Pour chaque sous-topologie incluse dans T_n_c de niveaux n-1, on a un nombre de nœuds allouées x_n-1 (Pour simplifier, il est considéré que chaque sous topologie à le même nombre de nœuds alloués. Ce cas particulier est facilement généralisable au cas où deux sous-topologies ont des nombres différents de nœuds alloués).
- Tant que nb_switch_alloue_niveau_n au niveau n est inférieur à x_n-1 :
   -- prendre un commutateur l1 non visité :
      --- il y a X commutateurs de niveau l1 dans la plus petite sous-topologie englobante,
      --- sélectionner un commutateur de niveau supérieur avec un compteur de valeur T le plus proche possible (nb_switch_alloué - x_n-1)
      --- allouer tous les liens descendant de ce commutateur vers les X commutateurs ayant des nœuds alloués (dont celui sélectionné)
      --- sélectionner dans les sous-topologies jumelles (« twin » dans l'article de QUENTIN et VIGNERAS) le même commutateur (il est forcément allouable dû à la façon dont on calcule le compteur),
      --- refaire au plus X fois de même en considérant un commutateur l2 qui vient d'être alloué tant que nb_switch_alloue_niveau_n est inférieur à x_n-1,
         ---- à chaque allocation de top commutateur, incrémenter nb_switch_alloue_niveau_n,
      --- puis aux niveaux suivants,
      --- une fois tous les niveaux faits, décrémenter les compteurs des commutateurs alloués de X.

Remarque : En cas d'allocation déséquilibrée, il est possible de le refaire pour certaines sous-topologies (afin d'avoir la bande passante nécessaire pour les nœuds).

## Revendications

1. Procédé (300) de mise en œuvre d'une tâche dans une grappe d'ordinateurs formant un supercalculateur comportant :
- des ordinateurs (102, 104) présentant chacun au moins une interface réseau formant un nœud (1...16) ; et
- un réseau (110) d'interconnexion des nœuds (1...16), comportant :
• des commutateurs (1.1...4.8) présentant chacun des interfaces réseaux, et
• des liens (114) connectant chacun soit un nœud (1...16) et une interface réseau d'un commutateur (1.1...1.8), soit deux interfaces réseaux de deux commutateurs (2.1...4.8) respectifs ;
le procédé (300) comportant :
- le déploiement de la tâche dans le supercalculateur, ce déploiement comportant :
• l'allocation (310) de nœuds (1...16) à la tâche,
• la détermination (312), dans le réseau (110), d'un sous-réseau, d'interconnexion des nœuds alloués, satisfaisant un ou plusieurs critères de détermination prédéfinis,
• l'allocation (314) du sous-réseau, et en particulier des liens appartenant à ce sous-réseau, à la tâche, et
• l'implémentation (316) de routes de communication inter-nœuds dans le sous-réseau alloué ; et
- l'exécution (304) de la tâche ;
le procédé (300) étant **caractérisé en ce qu'**il comporte en outre :
- à la fin de l'exécution de la tâche, la désallocation (320) des liens alloués à la tâche, puis :
• la détection (322) d'au moins un lien qui n'est alloué à aucune tâche, et
• le placement (324) de chaque lien détecté dans un état inactif, dans lequel le lien requiert une consommation énergétique inférieure à une consommation énergétique requise par un lien associé à au moins une tâche.

2. Procédé (300) selon la revendication 1, comportant, pour placer un lien dans l'état inactif, l'extinction des deux interfaces réseau que ce lien connecte de sorte qu'aucun courant ou lumière ne parcourt ce lien.

3. Procédé (300) selon la revendication 1, comportant, pour placer un lien dans l'état inactif, la diminution d'une fréquence de fonctionnement d'au moins une des deux interfaces réseau que ce lien connecte.

4. Procédé (300) selon l'une quelconque des revendications 1 à 3, dans lequel le ou les critères de détermination du sous-réseau comportent un critère selon lequel le sous-réseau utilise uniquement des liens qui ne sont alloués à aucune autre tâche déjà déployée ou bien qui sont alloués à moins de N autres tâches déjà déployées, N étant un nombre prédéfini valant un ou plus.

5. Procédé (300) selon l'une quelconque des revendications 1 à 4, dans lequel la détection (322) d'au moins un lien qui n'est alloué à aucune tâche est réalisée uniquement parmi les liens désalloués de la tâche après son exécution (304) et consiste à détecter (322) au moins un lien qui n'est alloué à aucune autre tâche.

6. Procédé (300) selon l'une quelconque des revendications 1 à 5, dans lequel le ou les critères de détermination du sous-réseau comportent un critère de minimisation de commutateurs utilisés, selon lequel le sous-réseau déterminé est celui, parmi au moins deux sous-réseaux satisfaisant le ou les critères autres que ce critère de minimisation de commutateurs utilisés, utilisant le plus de commutateurs déjà alloués chacun à au moins une tâche déjà déployée.

7. Procédé (300) selon la revendication 6, dans lequel la détermination du sous-réseau comporte la détermination des au moins deux sous-réseaux satisfaisant le ou les critères autres que ce critère de minimisation de commutateurs utilisés, puis la sélection parmi ces au moins deux sous-réseaux de celui utilisant le plus de commutateurs déjà alloués chacun à au moins une tâche déjà déployée.

8. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé selon l'une quelconque des revendications 1 à 7, lorsque ledit programme est exécuté sur un ou plusieurs ordinateurs.

9. Grappe d'ordinateurs formant un supercalculateur comportant :
- des ordinateurs (102, 104) présentant chacun au moins une interface réseau formant un nœud (1...16) ;
- un réseau (110) d'interconnexion des nœuds (1...16), comportant :
• des commutateurs (1.1...4.8) présentant chacun des interfaces réseaux, et
• des liens (114) connectant chacun soit un nœud (1...16) et une interface réseau d'un commutateur (1.1...1.8), soit deux interfaces réseaux de deux commutateurs respectifs (2.1...4.8) ;
le supercalculateur comportant en outre des moyens logiciels et/ou matériels de déploiement d'une tâche, conçus pour mettre en œuvre les étapes suivantes :
- le déploiement de la tâche dans le supercalculateur, ce déploiement comportant :
• l'allocation (310) de nœuds (1...16) à la tâche,
• la détermination (312), dans le réseau (110), d'un sous-réseau, d'interconnexion des nœuds alloués, satisfaisant un ou plusieurs critères de détermination prédéfinis,
• l'allocation (314) du sous-réseau, et en particulier des liens appartenant à ce sous-réseau, à la tâche, et
• l'implémentation (316) de routes de communication inter-nœuds dans le sous-réseau alloué ; et
- l'exécution (304) de la tâche ;
- à la fin de l'exécution de la tâche, la désallocation (320) des liens alloués à la tâche, puis :
• la détection (322) d'au moins un lien qui n'est alloué à aucune tâche, et
• le placement (324) de chaque lien détecté dans un état inactif, dans lequel le lien requiert une consommation énergétique inférieure à une consommation énergétique requise par un lien associé à au moins une tâche.

## Patentansprüche

1. Verfahren (300) zum operativen Umsetzen einer Aufgabe in einem Cluster von Computern, die einen Superrechner ausbilden, umfassend:
- Computer (102, 104), die jeweils mindestens eine Netzwerkschnittstelle aufweisen, die einen Knoten (1... 16) ausbildet; und
- ein Netzwerk (110) für die Vernetzung der Knoten (1...16), umfassend:
• Schalter (1.1...4.8), die jeweils Netzwerkschnittstellen aufweisen, und
• Verbindungsleitungen (114), die jeweils entweder einen Knoten (1...16) und eine Netzwerkschnittstelle eines Schalters (1.1...1.8) oder zwei Netzwerkschnittstellen zweier jeweiliger Schalter (2.1...4.8) verbinden;
das Verfahren (300) umfassend:
- Einsetzen der Aufgabe in dem Superrechner, dieses Einsetzen umfassend:
• Zuweisen (310) von Knoten (1... 16) in der Aufgabe,
• Bestimmen (312), in dem Netzwerk (110), eines Teilnetzwerks für die Vernetzung der zugewiesenen Knoten, das eine oder mehrere vordefinierte Bestimmungskriterien erfüllt,
• Zuweisen (314) des Teilnetzwerks und insbesondere der Verbindungsleitungen, die zu diesem Teilnetzwerk gehören, zu der Aufgabe, und
• Implementieren (316) von Interknoten-Kommunikationswegen in dem zugewiesenen Teilnetzwerk; und
- Ausführen (304) der Aufgabe;
wobei das Verfahren (300) **dadurch gekennzeichnet ist, dass** es ferner umfasst:
- am Ende der Ausführung der Aufgabe, Freigeben (320) der Verbindungsleitungen, die der Aufgabe zugewiesen sind, dann:
• Erkennen (322) mindestens einer Verbindungsleitung, die keiner Aufgabe zugewiesen ist, und
• Platzieren (324) jeder erkannten Verbindungsleitung in einen inaktiven Zustand, wobei die Verbindungsleitung einen geringeren Energieverbrauch als ein Energieverbrauch benötigt, der von einer Verbindungsleitung benötigt wird, die mindestens einer Aufgabe zugeordnet ist.

2. Verfahren (300) nach Anspruch 1, umfassend, zum Platzieren einer Verbindungsleitung in den inaktiven Zustand, Löschen der zwei Netzwerkschnittstellen, die diese Verbindungsleitung verbindet, sodass kein Strom oder Licht durch diese Verbindungsleitung fließt.

3. Verfahren (300) nach Anspruch 1, umfassend, zum Platzieren einer Verbindungsleitung in den inaktiven Zustand, Verringern einer Betriebsfrequenz von mindestens einer der zwei Netzwerkschnittstellen, die diese Verbindungsleitung verbindet.

4. Verfahren (300) nach einem der Ansprüche 1 bis 3, wobei das Bestimmungskriterium oder die Bestimmungskriterien für das Teilnetzwerk ein Kriterium umfassen, nach dem das Teilnetzwerk einzig Verbindungsleitungen verwendet, die keiner anderen Aufgabe, die bereits eingesetzt ist, zugewiesen sind, oder die weniger als N anderen Aufgaben, die bereits eingesetzt sind, zugewiesen sind, wobei N eine vordefinierte Zahl im Wert von eins oder mehr ist.

5. Verfahren (300) nach einem der Ansprüche 1 bis 4, wobei das Erkennen (322) von mindestens einer Verbindungsleitung, die keiner Aufgabe zugewiesen ist, einzig unter den Verbindungsleitungen durchgeführt wird, die nach ihrer Ausführung (304) von der Aufgabe freigegeben werden, und im Erkennen (322) mindestens einer Verbindungsleitung, die keiner anderen Aufgabe zugewiesen ist, besteht.

6. Verfahren (300) nach einem der Ansprüche 1 bis 5, wobei das Bestimmungskriterium oder die Bestimmungskriterien für das Teilnetzwerk ein Minimierungskriterium für die verwendeten Schalter umfassen, nach dem das bestimmte Teilnetzwerk dasjenige unter mindestens zwei Teilnetzwerken ist, die das Kriterium oder die Kriterien, außer dem Minimierungskriterium für die verwendeten Schalter, erfüllen, die die meisten Schalter, die jeweils bereits mindestens einer Aufgabe, die bereits eingesetzt ist, zugewiesen sind, verwenden.

7. Verfahren (300) nach Anspruch 6, wobei das Bestimmen des Teilnetzwerks das Bestimmen der mindestens zwei Teilnetzwerke umfasst, die das Kriterium oder die Kriterien, außer dem Minimierungskriterium für die verwendeten Schalter, erfüllen, dann Auswählen unter diesen mindestens zwei Teilnetzwerken, desjenigen, das die meisten Schalter, die jeweils bereits mindestens einer Aufgabe, die bereits eingesetzt ist, zugewiesen sind, verwendet.

8. Computerprogramm, das von einem Kommunikationsnetzwerk heruntergeladen und/oder auf einem computerlesbaren Träger gespeichert und/oder durch einen Prozessor ausgeführt werden kann,
**dadurch gekennzeichnet, dass** es Anweisungen für die Ausführung der Schritte eines Verfahrens nach einem der Ansprüche 1 bis 7 einschließt, wenn das Programm auf einem oder mehreren Computern ausgeführt wird.

9. Cluster von Computern, die einen Superrechner ausbilden, umfassend:
- Computer (102, 104), die jeweils mindestens eine Netzwerkschnittstelle aufweisen, die einen Knoten (1... 16) ausbildet;
- ein Netzwerk (110) für die Vernetzung der Knoten (1...16), umfassend:
• Schalter (1.1...4.8), die jeweils Netzwerkschnittstellen aufweisen, und
• Verbindungsleitungen (114), die jeweils entweder einen Knoten (1...16) und eine Netzwerkschnittstelle eines Schalters (1.1...1.8) oder zwei Netzwerkschnittstellen zweier jeweiliger Schalter (2.1...4.8) verbinden;
der Superrechner ferner umfassend Software- und/oder Hardwaremittel zum Einsetzen einer Aufgabe, die zum operativen Umsetzen der folgenden Schritte konzipiert ist:
- Einsetzen der Aufgabe in dem Superrechner, das Einsetzen umfassend:
• Zuweisen (310) von Knoten (1... 16) in der Aufgabe,
• Bestimmen (312), in dem Netzwerk (110), eines Teilnetzwerks für die Vernetzung der zugewiesenen Knoten, das eine oder mehrere vordefinierte Bestimmungskriterien erfüllt,
• Zuweisen (314) des Teilnetzwerks und insbesondere der Verbindungsleitungen, die zu diesem Teilnetzwerk gehören, zu der Aufgabe, und
• Implementieren (316) von Interknoten-Kommunikationswegen in dem zugewiesenen Teilnetzwerk; und
- Ausführen (304) der Aufgabe;
- am Ende der Ausführung der Aufgabe, Freigeben (320) der Verbindungsleitungen, die der Aufgabe zugewiesen sind, dann:
• Erkennen (322) mindestens einer Verbindungsleitung, die keiner Aufgabe zugewiesen ist, und
• Platzieren (324) jeder erkannten Verbindungsleitung in einen inaktiven Zustand, wobei die Verbindungsleitung einen geringeren Energieverbrauch als ein Energieverbrauch benötigt, der von einer Verbindungsleitung benötigt wird, die mindestens einer Aufgabe zugeordnet ist.

## Claims

1. A method (300) for implementing a task in a computer cluster forming a supercomputer that comprises:
- computers (102, 104), each having at least one network interface forming a node (1... 16); and
- a network (110) interconnecting the nodes (1...16), comprising:
• switches (1.1...4.8), each having network interfaces; and
• links (114), each connecting either a node (1...16) and a network interface of a switch (1.1...1.8), or two network interfaces of two respective switches (2.1...4.8),
the method (300) comprising:
- deploying the task in the supercomputer, this deployment comprising:
• allocating (310) nodes (1... 16) to the task;
• determining (312), in the network (110), a subnetwork interconnecting the allocated nodes, said subnetwork satisfying one or more predefined determination criteria;
• allocating (314) the subnetwork, and in particular the links belonging to this subnetwork, to the task; and
• implementing (316) inter-node communication routes in the allocated subnetwork; and
- executing (304) the task,
the method (300) being **characterized in that** it further comprises:
- at the end of the execution of the task, deallocating (320) the links allocated to the task, then:
• detecting (322) at least one link that is not allocated to any task; and
• placing (324) each detected link in an inactive state, in which the link requires less energy consumption than the energy consumption required by a link associated with at least one task.

2. The method (300) according to claim 1, comprising, in order to place a link in the inactive state, switching off the two network interfaces that this link connects so that no current or light passes through this link.

3. The method (300) according to claim 1, comprising, in order to place a link in the inactive state, reducing an operating frequency of at least one of the two network interfaces that this link connects.

4. The method (300) according to one of claims 1 to 3, wherein the criterion or criteria for determining the subnetwork comprise a criterion according to which the subnetwork uses only links that are not allocated to any other already deployed task or that are allocated to fewer than N other already deployed tasks, where N is a predefined number of one or more.

5. The method (300) according to one of claims 1 to 4, wherein the detection (322) of at least one link that is not allocated to any task is performed only among the links deallocated from the task after its execution (304) and consists in detecting (322) at least one link that is not allocated to any other task.

6. The method (300) according to one of claims 1 to 5, wherein the criterion or criteria for determining the subnetwork include a criterion for minimizing the number of switches used, according to which the subnetwork determined is the one, from at least two subnetworks satisfying the criterion or criteria other than this criterion for minimizing the number of switches used, using the most switches already allocated, each to at least one already deployed task.

7. The method (300) according to claim 6, wherein determining the subnetwork comprises determining the at least two subnetworks satisfying the criterion or criteria other than this criterion for minimizing the number of switches used, then selecting from these at least two subnetworks the one using the most switches already allocated, each to at least one already deployed task.

8. A computer program downloadable from a communication network and/or recorded on a computer-readable medium and/or executable by a processor, **characterized in that** it includes instructions for executing the steps of a method according to one of claims 1 to 7, when said program is executed on one or more computers.

9. A computer cluster forming a supercomputer that comprises:
- computers (102, 104), each having at least one network interface forming a node (1... 16);
- a network (110) interconnecting the nodes (1...16), comprising:
• switches (1.1...4.8), each having network interfaces; and
• links (114) each connecting either a node (1...16) and a network interface of a switch (1.1...1.8), or two network interfaces of two respective switches (2.1...4.8),
the supercomputer further comprising software and/or hardware means for deploying a task, said means being designed to implement the following steps:
- deploying the task in the supercomputer, this deployment comprising:
• allocating (310) nodes (1... 16) to the task;
• determining (312), in the network (110), a subnetwork interconnecting the allocated nodes, said subnetwork satisfying one or more predefined determination criteria;
• allocating (314) the subnetwork, and in particular the links belonging to this subnetwork, to the task; and
• implementing (316) inter-node communication routes in the allocated subnetwork; and
- executing (304) the task;
- at the end of the execution of the task, deallocating (320) the links allocated to the task, then:
• detecting (322) at least one link that is not allocated to any task; and
• placing (324) each detected link in an inactive state, in which the link requires less energy consumption than the energy consumption required by a link associated with at least one task.
